(19) Europäisches Patentamt
European Patent Office
Office européen des brevets

(11) **EP 3 904 906 A1**

(12) **EUROPEAN PATENT APPLICATION**
published in accordance with Art. 153(4) EPC

(43) Date of publication:
**03.11.2021 Bulletin 2021/44**

(51) Int Cl.:
*G01S 13/58* (2006.01)　　*B60W 40/02* (2006.01)

(21) Application number: **18944696.6**

(22) Date of filing: **27.12.2018**

(86) International application number:
**PCT/CN2018/124249**

(87) International publication number:
**WO 2020/133041 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SZ DJI Technology Co., Ltd.**
**Shenzhen, Guangdong 518057 (CN)**

(72) Inventors:
• **LU, Xinfei**
  **Shenzhen, Guangdong 518057 (CN)**
• **CHEN, Lei**
  **Shenzhen, Guangdong 518057 (CN)**
• **LI, Yiqiang**
  **Shenzhen, Guangdong 518057 (CN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **VEHICLE SPEED CALCULATION METHOD, SYSTEM AND DEVICE, AND STORAGE MEDIUM**

(57) A vehicle speed calculation method, system, device, and storage medium consistent with the embodiments of the present disclosure are provided. The method includes obtaining an echo signal and generating detection data according to the echo signal, determining a moving speed of a stationary object, that is near the vehicle relative and stationary relative to a ground, to the vehicle according to the detection data, determining a vehicle speed according to the moving speed of the stationary object relative to the vehicle. In the embodiment of the present disclosure, the echo signal is obtained and the detection data is generated according to the echo signal. The moving speed of the stationary object, that is stationary relative to the ground and is around the vehicle, relative to the vehicle is determined according to the detection data. The vehicle speed is determined according to the moving speed of the stationary object relative to the vehicle. That is, the vehicle speed can be determined by processing the echo signal. There is no need to obtain the vehicle speed from a CAN bus, which avoids a transmission delay of the CAN bus and enables to obtain the vehicle speed in real time, thereby improving a real-time nature of obtaining of the vehicle speed and avoiding an impact on performance of the radar.

Obtain an echo signal and generate detection data according to the echo signal　S201

Determine, according to the detection data, a stationary object around the vehicle and stationary relative to a ground　S202

Determine a moving speed of the stationary object relative to the vehicle　S203

Determine a vehicle speed according to the moving speed of the stationary object relative to the vehilce　S204

FIG. 2

**Description**

**TECHNICAL FIELD**

The present disclosure relates to the field of vehicles and, in particular, to a vehicle speed calculation method, system, device, and storage medium.

**BACKGROUND**

With the development of driving assistance technology and autonomous driving technology, millimeter-wave radars are increasingly used in vehicles. The millimeter-wave radar has the advantages of all-day, all-weather, long range, and high accuracy of speed measurement, etc., which makes up for the shortcomings of other sensors, such as ultrasound sensors and cameras. Generally, the millimeter-wave radar needs a vehicle speed to detect environment surrounding the vehicle. In the existing technology, the millimeter-wave radar arranged at the vehicle is usually connected to an electrical and electronic system of the vehicle through a communication bus to obtain vehicle-related information, for example, the vehicle speed, a turning radius of the vehicle, etc. For example, the millimeter-wave radar can be connected to the vehicle via a controller area network (CAN) bus and obtain relevant information of the vehicle from the CAN bus.

However, there is a certain delay when the CAN bus transmits the vehicle-related information, which disables the millimeter-wave radar to obtain the vehicle-related information in real time, especially the vehicle speed in real time, which has a certain impact on the performance of the millimeter-wave radar. In addition, the millimeter-wave radar connected to the CAN bus is usually used in factory-installed products, that is, the millimeter-wave radar needs to be mounted at the vehicle during a vehicle assembly, and is hard to be used in aftermarket installed products, which is not conducive for follow-up separate uses of the millimeter wave radar.

**SUMMARY**

A vehicle speed calculation method, system, device, and storage medium consistent with the embodiments of the present disclosure are provided. A method for obtaining vehicle speed without using a CAN bus is provided, which improves a real-time nature of obtaining vehicle speed and avoids an impact on performance of the radar.

A first aspect of the embodiments of the present disclosure is to provide a vehicle speed calculation method, which is applied to a vehicle. The vehicle is provided with a radar. The radar at least includes an antenna. The antenna is used to receive echo signals. The method includes obtaining an echo signal and generating detection data according to the echo signal, determining a stationary object around the vehicle and stationary relative to a ground according to the detection data, determining a moving speed of the stationary object relative to the vehicle, and determining a vehicle speed according to the moving speed of the stationary object relative to the vehicle.

A second aspect of the embodiments of the present disclosure is to provide a vehicle speed calculation system, including a radar, a memory, and a processor. The radar includes at least an antenna. The antenna is used to receive echo signals. The memory stores a program code. The processor is configured to execute the program code to obtain an echo signal and generate detection data according to the echo signal, determine a stationary object around the vehicle and stationary relative to a ground according to the detection data, determine a moving speed of the stationary object relative to the vehicle, and determine a vehicle speed according to the moving speed of the stationary object relative to the vehicle.

A third aspect of the embodiments of the present disclosure is to provide a vehicle, including a vehicle body, a power system mounted at the vehicle body to provide power, and the vehicle speed calculation system as described in the second aspect.

A fourth aspect of the embodiments of the present disclosure is to provide a computer-readable storage medium storing a computer program. The computer program is executed by a processor to implement the method described in the first aspect.

In the embodiments consistent with the present disclosure, the vehicle speed calculation method, system, device, and storage medium are provided. The echo signal is obtained and the detection data is generated according to the echo signal. The moving speed of the stationary object, that is stationary relative to the ground and is around the vehicle, relative to the vehicle is determined according to the detection data. Furthermore, the vehicle speed is determined according to the moving speed of the stationary object relative to the vehicle. That is, the vehicle speed can be determined by processing the echo signal. There is no need to obtain the vehicle speed from a CAN bus, which avoids a transmission delay of the CAN bus and enables to obtain the vehicle speed in real time, thereby improving a real-time nature of obtaining of the vehicle speed and avoiding an impact on performance of the radar. In addition, because there is no need to obtain the vehicle speed from the CAN bus, even if the radar is not mounted at the vehicle during a vehicle assembly, the radar can also be applied to aftermarket installed products.

## BRIEF DESCRIPTION OF THE DRAWINGS

In order to explain the technical solutions in the embodiments of the present disclosure more clearly, the drawings used in the description of the embodiments will be briefly introduced below. It will be appreciated that the drawings in the following description are some of the embodiments of the present disclosure. Other drawings can be conceived by those having ordinary skills in the art on the basis of the drawings without inventive efforts.

FIG. 1 is a schematic diagram showing an example application scenario according to an example embodiment of the present disclosure.
FIG. 2 is a schematic flow chart of a vehicle speed calculation method according to an example embodiment of the present disclosure.
FIG. 3 is a schematic diagram showing two-dimensional data according to an example embodiment of the present disclosure.
FIG. 4 is a schematic diagram showing change of a frequency of a linear frequency-modulated continuous wave with time according to an example embodiment of the present disclosure.
FIG. 5 is a schematic flow chart of a vehicle speed calculation method according to another example embodiment of the present disclosure.
FIG. 6 is a schematic flow chart of a vehicle speed calculation method according to another example embodiment of the present disclosure.
FIG. 7 is a schematic diagram showing two-dimensional data according to an example embodiment of the present disclosure.
FIG. 8 is a schematic diagram showing two-dimensional data according to an example embodiment of the present disclosure.
FIG. 9 is a schematic flow chart of a vehicle speed calculation method according to another example embodiment of the present disclosure.
FIG. 10 is a schematic flow chart of a vehicle speed calculation method according to another example embodiment of the present disclosure.
FIG. 11 is a schematic diagram showing change of a frequency of another linear frequency-modulated continuous wave with time according to an example embodiment of the present disclosure.
FIG. 12 is a schematic structural diagram of a vehicle speed calculation system according to an example embodiment of the present disclosure.

Reference numerals: Vehicle 11; Server 12; Speed unit 71, 72, 73, 7N; Distance unit 81, 82, 83, 8M; Vehicle speed calculation system 120; Radar 121; Memory 122; Processor 123.

## DETAILED DESCRIPTION OF THE EMBODIMENTS

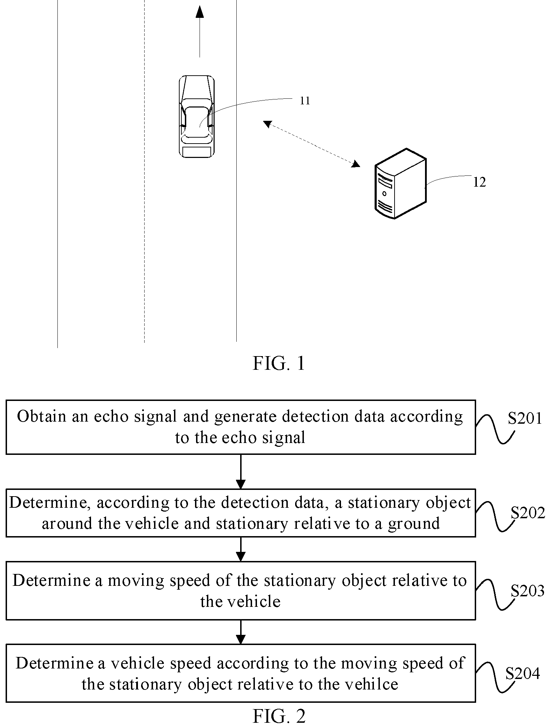

Technical solutions of the present disclosure will be clearly described with reference to the drawings. It will be appreciated that the described embodiments are some rather than all of the embodiments of the present disclosure. Other embodiments conceived by those having ordinary skills in the art on the basis of the described embodiments without inventive efforts should fall within the scope of the present disclosure.
As used herein, when a first component is referred to as "fixed to" a second component, it is intended that the first component may be directly attached to the second component or may be indirectly attached to the second component via another component. When a first component is referred to as "connecting" to a second component, it is intended that the first component may be directly connected to the second component or may be indirectly connected to the second component via a third component between them.
Unless otherwise defined, all the technical and scientific terms used herein have the same or similar meanings as generally understood by one of ordinary skill in the art. As described herein, the terms used in the specification of the present disclosure are intended to describe example embodiments, instead of limiting the present disclosure. The term "and/or" used herein includes any suitable combination of one or more related items listed.
The embodiments of the present disclosure are described in detail below with reference to the drawings. When there is no conflict, the following embodiments and features of the embodiments can be combined with each other.
A vehicle speed calculation method consistent with the embodiments of the present disclosure is provided. The method is applied to a vehicle. The vehicle is provided with a radar. In some embodiments, the radar includes a millimeter wave radar. The radar includes at least an antenna. The antenna is used to receive one or more echo signals. As shown in FIG. 1, a vehicle 11 travels in a right lane, and the vehicle 11 is provided with a radar. The radar may specifically include a millimeter wave radar. The millimeter wave radar may include a rear-mounted millimeter-wave radar or a front-mounted millimeter-wave radar. Alternately, the millimeter-wave radar may be integrated in the vehicle.

In an example embodiment, the radar may specifically include a frequency-modulated continuous wave (FMCW) radar. In some embodiments, a detection signal of the radar includes a linear frequency-modulated continuous wave. FMCW radar may include an antenna, a radio frequency front terminal, a modulation module, and a signal processing unit. The radio frequency front terminal is used to transmit a detection signal. The detection signal includes a linear frequency-modulated continuous wave, that is, the frequency of the detection signal transmitted by the FMCW radar is linearly modulated. Specifically, the modulation module is used to linearly modulate the frequency of the detection signal transmitted by the FMCW radar. When the detection signal transmitted by the FMCW radar is reflected by an object around the vehicle, the antenna of the FMCW radar receives an echo signal reflected by the object. The signal processing unit of the FMCW radar can process the echo signal to obtain detection data. In some embodiments, the detection data includes at least one of the following: energy of the object around the vehicle, a distance of the object around the vehicle relative to the vehicle, a speed of the object around the vehicle relative to the vehicle, or an angle of the object around the vehicle relative to the vehicle.

In some embodiments, the FMCW radar may also be in communication with a vehicle-mounted processor. After the antenna of the FMCW radar receives the echo signal, the signal processing unit of the FMCW radar may perform an analog-to-digital conversion on the echo signal. That is, the echo signal is digitally sampled, the sampled echo signal is sent to the vehicle-mounted processor, and the vehicle-mounted processor processes the sampled echo signal to obtain the detection data. After the signal processing unit or the vehicle-mounted processor of the FMCW radar obtains the detection data, the signal processing unit or the vehicle-mounted processor of the FMCW radar can also calculate a vehicle speed according to the detection data.

Alternately, in some embodiments, the FMCW radar is in communication connection with the vehicle-mounted processor. When the signal processing unit of the FMCW radar processes the echo signal to obtain the detection data, the signal processing unit can also send the detection data to the vehicle-mounted processor. The vehicle-mounted processor calculates the vehicle speed according to the detection data.

That is, in some embodiments, an execution subject of the vehicle speed calculation method is not limited, which can include the signal processing unit of the FMCW radar, the vehicle-mounted processor, or another device with data processing functions, for example, a server 12 shown in FIG. 1, other than the signal processing unit of the radar or the vehicle-mounted processor. In some embodiments, the vehicle 11 is further provided with a communication module. The communication module may include a wired communication module or a wireless communication module. Taking the wireless communication module as an example, when the radar of the vehicle 11, such as the antenna of the FMCW radar, receives the echo signal reflected by the object, the signal processing unit of the FMCW radar performs digital sampling of the echo signal. The vehicle 11 can send the sampled echo signal to the server 12 through the wireless communication module. The server 12 processes the sampled echo signal, and after obtaining the detection data, calculates the vehicle speed according to the detection data. Alternatively, after the signal processing unit of the FMCW radar or the vehicle-mounted processor obtains the detection data, the vehicle 11 may send the detection data to the server 12 through the wireless communication module. The server 12 calculates the vehicle speed according to the detection data. The vehicle speed calculation method will be described in detail below in conjunction with specific embodiments.

FIG. 2 is a schematic flow chart of a vehicle speed calculation method according to an example embodiment of the present disclosure. As shown in FIG. 2, the method consistent with the example embodiment includes following processes.

At S201, an echo signal is obtained and detection data in generated according to the echo signal.

The execution subject of the method in the example embodiment may include the signal processing unit of the FMCW radar, the vehicle-mounted processor, or the server 12 shown in FIG. 1. In some embodiments, the signal processing unit of the FMCW radar is used as an example to introduce the vehicle speed calculation method in detail.

Specifically, after the antenna of the FMCW radar receives the echo signal, the signal processing unit of the FMCW radar obtains the echo signal and performs an analog-to-digital conversion on the echo signal, that is, performs digital sampling on the echo signal and further performs a Fast Fourier Transformation (FFT) on the sampled echo signal. Specifically, the signal processing unit can perform a two-dimensional FFT, that is, a speed dimension FFT and a distance dimension FFT, on the sampled echo signal to get the detection data. Correspondingly, the detection data includes two-dimensional data including a distance dimension and a speed dimension. The distance dimension includes a plurality of distance units, and the speed dimension includes a plurality of speed units.

In some embodiments, the FMCW radar may include more than one antenna. For example, the FMCW radar includes a plurality of antennas. Each of the plurality of antennas may receive an echo signal simultaneously. The signal processing unit may perform an analog-to-digital conversion and a two-dimensional FFT on the echo signal received by each of the plurality of antennas, obtain the two-dimensional data including the distance dimension and the speed dimension corresponding to the each of the plurality of antennas, and perform a multi-channel incoherent accumulation on the two-dimensional data including the distance dimension and the speed dimension corresponding to the each of the plurality of antennas to obtain detection data. In some embodiments, one antenna corresponds to one channel. The detection data obtained after the multi-channel incoherent accumulation still includes two-dimensional data including a distance dimension and a speed dimension. The distance dimension includes a plurality of distance units, and the speed dimension includes a plurality of speed unit.

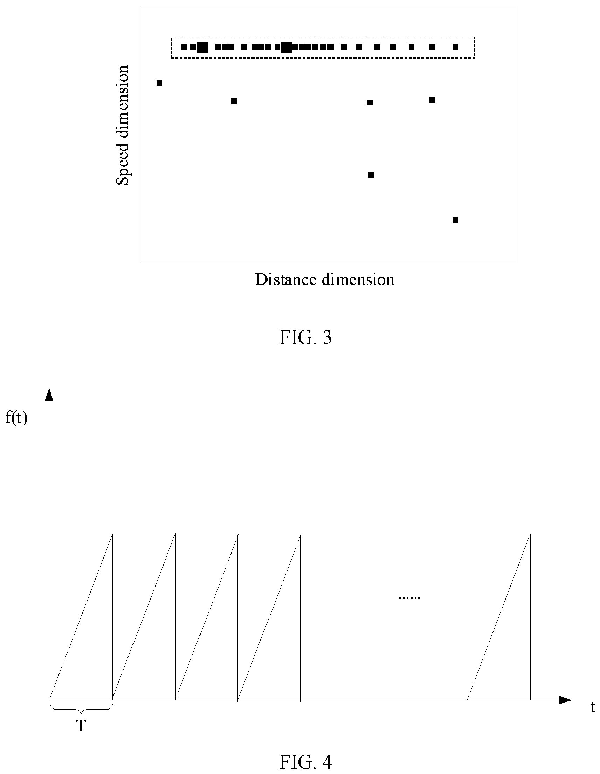

In an example embodiment, the two-dimensional data may specifically include an N*M matrix, that is, a matrix with N rows and M columns. As shown in FIG. 3, a horizontal axis represents a distance dimension, a vertical axis represents a speed dimension. The speed dimension includes N speed units, the distance dimension includes M distance units. N and M can be equal or unequal. Both N and M are greater than 1. A point in the matrix can be used to represent a target point detected by the radar. A corresponding speed of the target point in the speed dimension represents a speed of the target point relative to the radar. A corresponding distance of the target point in the distance dimension represents a distance of the target point relative to the radar. In addition, in this matrix, energy of the points at different positions is different. As shown in FIG. 3, the points in a black part represent the target points with energy greater than a preset energy threshold. It can be understood that when the preset energy threshold is larger, the black part includes fewer points, and when the preset energy threshold is smaller, the black part includes more points. An value of the preset energy threshold is not limited here.

In an example embodiment, the detection signal of the FMCW radar includes a linear frequency-modulated continuous wave. A frequency of the linear frequency-modulated continuous wave changes periodically. As shown in FIG. 4, a horizontal axis represents time, i.e., t, and a vertical axis represents a frequency change of the linear frequency-modulated continuous wave with time, i.e., f(t). f(t) is in a pulse shape. T represents a pulse recurrent time (PRT), that is, a pulse period.

In some embodiments, a number of the plurality of speed units is positively correlated to a number of one or more periods of the frequency change of the detection signal. For example, the speed dimension includes N speed units. N is positively correlated to the number of one or more periods of f(t). Specifically, N is equal to a number of pulse periods, that is, a number of pulses.

In some embodiments, a number of the plurality of distance units is positively correlated to a number of one or more sampling points of the echo signal in one period. For example, the distance dimension includes M distance units. M may specifically represent the number of sampling points of the echo signal in one pulse period T.

At S202, a stationary object around the vehicle and stationary relative to a ground is determined according to the detection data.

As shown in FIG. 3, a stationary object around the vehicle and stationary relative to a ground can be determined according to the two-dimensional data, i.e., the N*M matrix. The stationary object can include a fence, guardrail, road shoulder, continuous stone pile, or greenbelt, etc., at a side of the lane where the vehicle is located. The target point corresponding to the stationary object has relatively large energy.

In some embodiments, the stationary object around the vehicle and stationary relative to the ground includes an object around the vehicle with energy greater than a preset energy threshold. As shown in FIG. 3, the points in the black part represent target points with energy greater than the preset energy threshold. The target points with energy greater than the preset energy threshold are further clustered. The fences, guardrails, road shoulders, continuous stone piles, or greenbelts at the side of the lane, which are stationary relative to the ground, are usually continuous. Therefore, relatively concentrated black points in a dashed box as shown in FIG. 3 can be used as the stationary objects near the vehicle and stationary relative to the ground.

At S203, a moving speed of the stationary object relative to the vehicle is determined.

As shown in FIG. 3, a speed corresponding to a point in the black part of the dashed box in the speed dimension is the moving speed of the stationary object relative to the vehicle.

At S204, a vehicle speed is determined according to the moving speed of the stationary object relative to the vehicle.

It can be understood that when the vehicle is moving, the stationary objects near the vehicle and stationary relative to the ground move relative to the vehicle. The moving speed of the stationary object relative to the vehicle and the vehicle speed relative to the ground, i.e., the vehicle speed, are equal in magnitude but opposite in direction. Therefore, after the moving speed of the stationary object relative to the vehicle is determined, a magnitude of the moving speed of the stationary object relative to the vehicle can be regarded as a magnitude of the vehicle speed, and an opposite direction of the moving speed of the stationary object relative to the vehicle can be regarded as a direction of the vehicle speed. However, this method is only applicable when the radar speed measurement is not ambiguous. An unambiguous speed measurement specifically refers to a detectable speed range.

In some embodiments, determining the vehicle speed according to the moving speed of the stationary object relative to the vehicle includes determining a detectable speed range of the radar according to a wavelength of a detection signal of the radar and a frequency change period of the detection signal, and when the moving speed of the stationary object relative to the vehicle is within the detectable speed range, determining the vehicle speed according to the moving speed of the stationary object relative to the vehicle.

For example, a wavelength of a detection signal of the FMCW radar is recorded as $\lambda$, a frequency change period of the detection signal of the FMCW radar is recorded as PRT, and an unambiguous speed measurement range of the FMCW radar is recorded as $-\frac{V_{max}}{2}$ to $\frac{V_{max}}{2}$. The relationship between $V_{max}$, $\lambda$, and PRT is specifically shown in formula (1) as follows:

$$V_{max} = \frac{\lambda}{2PRT} \qquad (1)$$

After the moving speed of the stationary object relative to the vehicle is calculated through the matrix shown in FIG. 3, whether the moving speed is within the unambiguous speed measurement range of the FMCW radar is further determined. If the moving speed is within the unambiguous speed measurement range of the FMCW radar, the magnitude of the moving speed of the stationary object relative to the vehicle can be regarded as the magnitude of the vehicle speed, and the opposition direction of the moving speed of the stationary object relative to the vehicle can be regarded as the direction of the vehicle speed.

In an example embodiment, the echo signal is obtained, and the detection data is generated according to the echo signal. According to the detection data, the moving speed of the stationary object, that is stationary relative to the ground and is around the vehicle, relative to the vehicle is determined. Furthermore, according to the moving speed of the stationary object relative to the vehicle, the vehicle speed is determined. That is, the vehicle speed can be determined by processing the echo signal. There is no need to obtain the vehicle speed from the CAN bus, which avoids the transmission delay of the CAN bus and enables to obtain the vehicle speed in real time, thereby improving a real-time nature of the obtaining of the vehicle speed and avoiding an impact on the performance of the radar. In addition, because there is no need to obtain the vehicle speed from the CAN bus, even if the radar is not mounted at the vehicle during the vehicle assembly, the radar can also be applied to aftermarket installed products.

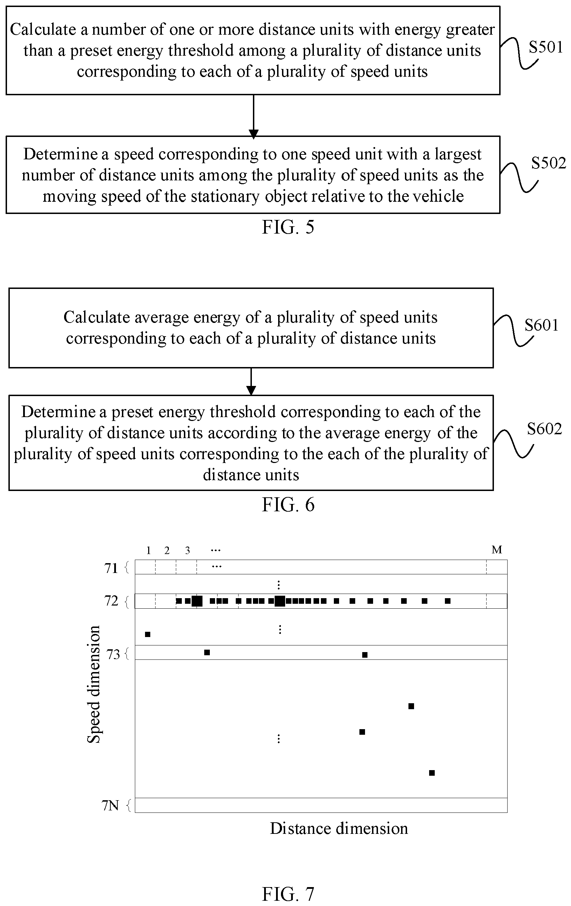

The vehicle speed calculation method consistent with the embodiments of the present disclosure is provided. FIG. 5 is a schematic flow chart of a vehicle speed calculation method according to another example embodiment of the present disclosure. FIG. 6 is a schematic flow chart of a vehicle speed calculation method according to another example embodiment of the present disclosure. As shown in FIG. 5, on the basis of the above-described embodiments, determining the moving speed of the stationary object relative to the vehicle includes following processes.

At S501, a number of one or more distance units with energy greater than a preset energy threshold among the plurality of distance units corresponding to each of the plurality of speed units is calculated.

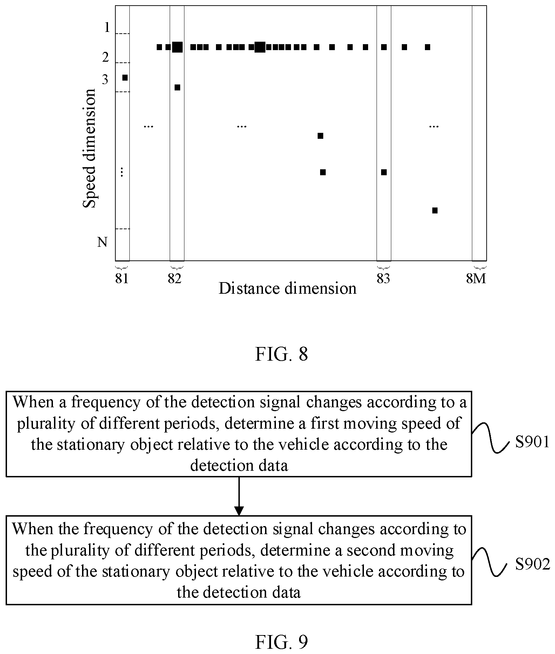

As shown in FIG. 7, 71, 72, 73, ..., 7N represent a plurality of speed units in the speed dimension, respectively. 71, 72, 73, and 7N are four random speed units in the plurality of speed units in the speed dimension. As shown in FIG. 8, 81, 82, 83, ..., 8M represent a plurality of distance units in the distance dimension, respectively. 81, 82, 83, and 8M are four random distance units in the plurality of distance units in the distance dimension.

As shown in FIG. 7, the plurality of distance units corresponding to each of the plurality of speed units may specifically include an intersection of the each of the plurality of speed units and the plurality of distance units in the distance dimension. As shown in FIG. 7, each of the plurality of speed units corresponds to M distance units. A number of one or more distance units with energy greater than the preset energy threshold among the plurality of distance units corresponding to each of the plurality of speed units is calculated. For example, a number of one or more distance units with energy greater than the preset energy threshold from M distance units corresponding to the speed unit 71 is calculated, a number of one or more distance units with energy greater than the preset energy threshold from M distance units corresponding to the speed unit 72 is calculated, and so on, and a number of one or more distance units with energy greater than the preset energy threshold from M distance units corresponding to the speed unit 7N is calculated.

In some embodiments, calculating the number of one or more distance units with energy greater than the preset energy threshold among the plurality of distance units corresponding to each of the plurality of speed units includes comparing the energy of each of the plurality of distance units corresponding to the each of the plurality of speed units with the preset energy threshold corresponding to the each of the plurality of distance units, if the energy of the each of the plurality of distance units is greater than the preset energy threshold corresponding to the each of the plurality of distance units, increasing a count corresponding to the each of the plurality of speed units by one.

In some embodiments, as shown in FIG. 8, each of the plurality of distance units in the distance dimension may correspond to a preset energy threshold, and the preset energy threshold corresponding to each of the plurality of distance units may be the same or different. Taking the speed unit 71 as an example, a first distance unit corresponding to the speed unit 71 is compared with a preset energy threshold corresponding to the first distance unit. If the first distance unit corresponding to the speed unit 71 is greater than the preset energy threshold corresponding to the first distance unit, a count corresponding to the speed unit 71 is increased by one. If the first distance unit corresponding to the speed unit 71 is less than or equal to the preset energy threshold corresponding to the first distance unit, the count corresponding to the speed unit 71 is not increased by one. A second distance unit corresponding to the speed unit 71 is further compared with a preset energy threshold corresponding to the second distance unit. If the second distance unit corresponding to the speed unit 71 is greater than the preset energy threshold corresponding to the second distance unit, then the count corresponding to the unit 71 is increased by one. If the second distance unit corresponding to the speed unit 71 is less than or equal to the preset energy threshold corresponding to the second distance unit, the count corresponding to the speed unit 71 is not increased by one. And so on, a $M^{th}$ distance unit corresponding to the speed unit 71 with a preset energy threshold corresponding to the $M^{th}$ distance unit. If the $M^{th}$ distance unit corresponding to the speed unit 71 is greater than the preset energy threshold corresponding to the $M^{th}$ distance unit, then the count corresponding to the speed unit 71 is increased by one. If the $M^{th}$ distance unit corresponding to the speed unit 71 is less than or equal to the preset energy threshold corresponding to the $M^{th}$ distance unit, the count corresponding to the speed unit 71 is not increased by one. Finally, the count corresponding to the speed unit 71 is a number of one or more distance units with energy greater than the preset energy threshold from M distance units corresponding to the speed unit 71. In a similar manner, a number of one or more distance units with energy greater than the preset energy threshold from M distance units corresponding to the speed unit 72 and a number of one or more distance units with energy greater than the preset energy threshold from M distance units corresponding to any other speed unit can be calculated.

At S502, a speed corresponding to one speed unit with a largest number of distance units among the plurality of speed units is determined as the moving speed of the stationary object relative to the vehicle.

The number of one or more distance units with energy greater than the preset energy threshold from M distance units corresponding to each of the plurality of speed units are compared with each other, that is, the count corresponding to each of the plurality of speed units are compared with each other. The points in the black part represent the target points with energy greater than the preset energy threshold. Thus, the number of distance units with energy greater than the preset energy threshold from M distance units corresponding to the speed unit 72 is the largest. The points in the black part of the dashed box represent stationary objects near the vehicle and stationary relative to the ground. Therefore, the speed corresponding to the speed unit 72 is the moving speed of the stationary object relative to the vehicle.

In some embodiments, before the number of one or more distance units with energy greater than the preset energy threshold among the plurality of distance units corresponding to each of the plurality of speed units is calculated, the method further includes following processes.

At S601, an average energy of the plurality of speed units corresponding to each of the plurality of distance units is calculated.

As shown in FIG. 8, the plurality of speed units corresponding to each of the plurality of distance units may specifically include the intersection of the each of the plurality of distance units and the plurality of speed units in the speed dimension. As shown in FIG. 8, each of the plurality of distance units corresponds to N speed units. An average energy of corresponding N speed units can be calculated for each of the plurality of distance units. The average energy of N speed units corresponding to each of the plurality of distance units may be the same or different. For example, an average energy of N speed units corresponding to the distance unit 81 is recorded as Pavg1.

At S602, a preset energy threshold corresponding to each of the plurality of distance units is determined according to the average energy of the plurality of speed units corresponding to the each of the plurality of distance unit.

A preset energy threshold corresponding to the distance unit 81 is determined according to the average energy Pavg1 of N speed units corresponding to the distance unit 81. The preset energy threshold corresponding to the distance unit 81 can be recorded as Pavg1+Z, where Z is selected based on a noise. In a similar manner, a preset energy threshold corresponding to another distance unit in the distance dimension can be calculated. For example, when the first distance unit corresponding to the speed unit 71 is compared with a preset energy threshold corresponding to the first distance unit, the preset energy threshold corresponding to the first distance unit is the preset energy threshold corresponding to the distance unit 81.

In an example embodiment, the number of one or more distance units with energy greater than the preset energy threshold among the plurality of distance units corresponding to each of the plurality of speed units is calculated. The speed corresponding to one speed unit with the largest number of distance units among the plurality of speed units is determined as the moving speed of the stationary object relative to the vehicle, thereby improving a calculation accuracy of the moving speed of the stationary object relative to the vehicle.

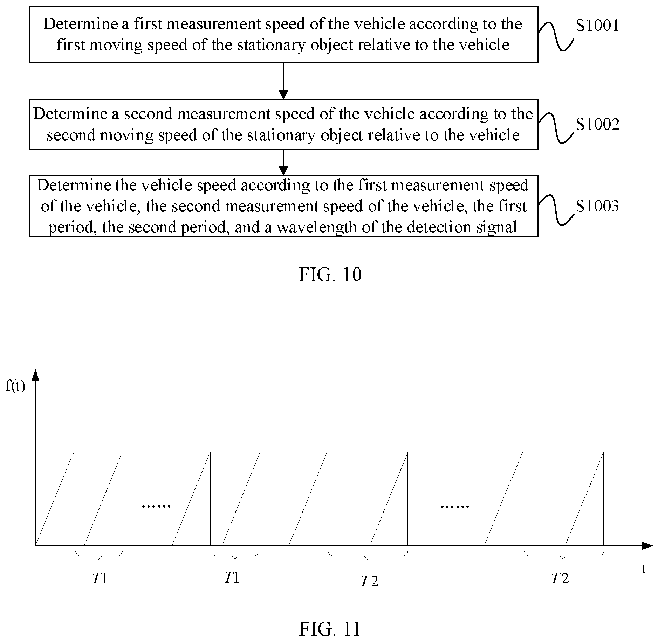

The vehicle speed calculation method consistent with the embodiments of the present disclosure is provided. FIG. 9 is a schematic flow chart of a vehicle speed calculation method according to another example embodiment of the present disclosure. FIG. 10 is a schematic flow chart of a vehicle speed calculation method according to another example embodiment of the present disclosure. As shown in FIG. 9, on the basis of the above-described embodiments, a frequency of a detection signal of the radar changes according to a plurality of different periods.

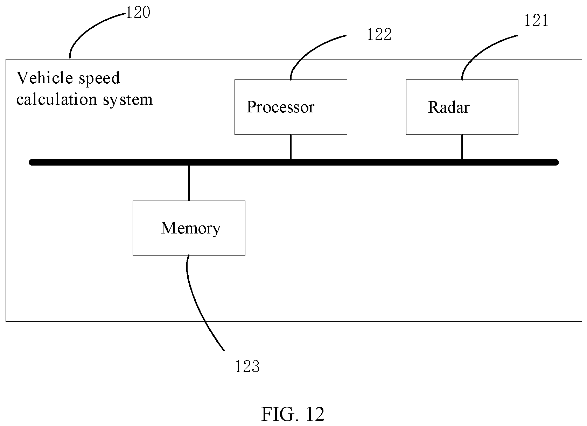

According to formula (1), due to a limitation of hardware conditions of the FMCW radar, the frequency change period PRT of the detection signal of the FMCW radar cannot be infinitely small, which causes the unambiguous speed measurement range of the FMCW radar to be a limited range. When the vehicle speed is relatively large, the vehicle speed determined according to the above method may be incorrect, which affects the performance of the radar system. In response to this problem, the frequency of the detection signal of the FMCW radar changes according to a plurality of different periods consistent is proposed in the embodiments of the present disclosure. The detection signal of the FMCW radar includes a linear frequency-modulated continuous wave. Taking a case where the frequency of the detection signal of the FMCW radar changes according to a first period and a second period as an example. The frequency of the linear frequency-modulated continuous wave changes with time as shown in FIG. 12. $T1$ represents the first period, and $T2$ represents the second period. It can be understood that this is only a schematic illustration, and a sequence of the first period and the second period is not limited here.

Determining the moving speed of the stationary object relative to the vehicle includes following processes.

At S901, when the frequency of the detection signal changes according to a first period of the plurality of different periods, a first moving speed of the stationary object relative to the vehicle is determined.

When the frequency of the detection signal of the FMCW radar changes according to the first period T1, according to the method described in the above embodiments, a first moving speed of the stationary object, that is stationary relative to the ground and is around the vehicle, relative to the vehicle can be calculated.

At S902, when the frequency of the detection signal changes according to a second period of the plurality of different periods, a second moving speed of the stationary object relative to the vehicle is determined.

When the frequency of the detection signal of the FMCW radar changes according to the second period T2, according to the method described in the above embodiments, a second moving speed of the stationary object, that is stationary relative to the ground and is around the vehicle, relative to the vehicle can be calculated.

Correspondingly, determining the vehicle speed according to the moving speed of the stationary object relative to the vehicle includes following processes.

At S1001, a first measurement vehicle speed is determined according to the first moving speed of the stationary object relative to the vehicle.

According to the method described in the above embodiments, after the first moving speed of the stationary object relative to the vehicle is determined, a magnitude of the first moving speed of the stationary object relative to the vehicle can be regarded as the magnitude of the vehicle speed, and an opposite direction of the first moving speed of the stationary object relative to the vehicle is regarded as the direction of the vehicle speed, to obtain the first measurement vehicle speed. That is, the first measurement vehicle speed and the first moving speed of the stationary object relative to the vehicle are equal in magnitude but opposite in direction. The first measurement vehicle speed is recorded as $V1$.

At S 1002, a second measurement vehicle speed is determined according to the second moving speed of the stationary object relative to the vehicle.

According to the method described in the above embodiments, after the second moving speed of the stationary object relative to the vehicle is determined, a magnitude of the second moving speed of the stationary object relative to the vehicle can be regarded as the magnitude of the vehicle speed, and an opposite direction of the second moving speed of the stationary object relative to the vehicle is regarded as the direction of the vehicle speed, to obtain the second measurement vehicle speed. That is, the second measurement vehicle speed and the second moving speed of the stationary object relative to the vehicle are equal in magnitude but opposite in direction. The second measurement vehicle speed is recorded as V2.

At S 1003, the vehicle speed is determined according to the first measurement vehicle speed, the second measurement vehicle speed, the first period, the second period, and the wavelength of the detection signal.

The vehicle speed is determined according to the first measurement vehicle speed VI, the second measurement vehicle speed V2, the first period T1, the second period T2, and the wavelength $\lambda$ of the detection signal. It can be understood that when the frequency of the detection signal of the FMCW radar changes according to a plurality of different periods, the wavelength $\lambda$ of the detection signal does not change.

In some embodiments, determining the vehicle speed according to the first measurement vehicle speed, the second measurement vehicle speed, the first period, the second period, and the wavelength of the detection signal, includes determining a first vehicle speed according to the first measurement vehicle speed, the first period, and the wavelength of the detection signal, determining a second vehicle speed according to the second measurement vehicle speed, the second period, and the wavelength of the detection signal, and determining a target vehicle speed according to the first vehicle speed and the second vehicle speed.

For example, according to the first measurement vehicle speed VI, the first period T1, and the wavelength $\lambda$ of the detection signal, the first vehicle speed is determined and is recorded as $V1 + mV1_{max}$, where

$$V1_{max} = \frac{\lambda}{2T1}$$

. According to the second measurement vehicle speed V2, the second period T2, and the wavelength $\lambda$ of the detection

signal, the second vehicle speed is determined and is recorded as $V2 + nV2_{max}$, where $V2_{max} = \frac{\lambda}{2T2}$. An actual vehicle speed is required to meet a condition described in formula (2) as follows:

$$V1 + mV1_{max} = V2 + nV2_{max} \qquad (2)$$

m and n are integers. According to formula (2), it can be known that the actual vehicle speed can be determined by selecting appropriate m, n, $T1$, and T2. A possible manner is traverse possible m and n existed to find the m and n satisfying a condition described in formula (3) as follows:

$$|(V1 + mV1_{max}) - (V2 + nV2_{max})| < T\square res\square old \qquad (3)$$

$T\square res\square old$ is a relatively small threshold value. Due to a limitation on the vehicle speed, a number of traversable m and n is limited, and a computation to find the m and n satisfying the condition described in formula (3) is not large.

After finding the m and n satisfying formula (3), the first vehicle speed, i.e., $V1 + mV1_{max}$, and the second vehicle speed, i.e., $V2 + nV2_{max}$, can be determined. Further, the actual vehicle speed can be calculated according to $V1 + mV1_{max}$ and $V2 + nV2_{max}$. The actual vehicle speed is also the target vehicle speed finally required.

In some embodiments, determining the target vehicle speed according to the first vehicle speed and the second vehicle speed includes determining an average value of the first vehicle speed and the second vehicle speed as the target vehicle speed.

For example, an average value of $V1 + mV1_{max}$ and $V2 + nV2_{max}$ is calculated, and the average value is used as the target vehicle speed.

In an example embodiment, the frequency of the detection signal of the radar changes according to a plurality of different periods, a plurality of moving speeds of the stationary object, that is stationary relative to the ground and is around the vehicle, relative to the vehicle are calculated. A plurality of measurement vehicle speeds are determined according to the plurality of moving speeds of the stationary object relative to the vehicle. The actual vehicle speed is determined according to the plurality of measurement speeds, the plurality of different periods, and the wavelength of the detection signal, thereby avoiding the problem of inaccurate calculation of the vehicle speed caused by directly regarding the magnitude of the moving speed of the stationary object relative to the vehicle is directly as the magnitude of the vehicle speed when the actual vehicle speed exceeds the unambiguous speed measurement range of the radar, and improving a calculation accuracy of the actual vehicle speed.

A vehicle speed calculation system consistent with the embodiments of the present disclosure is provided. FIG. 12 is a schematic structural diagram of a vehicle speed calculation system 120 according to an example embodiment of the present disclosure. As shown in FIG. 12, the vehicle speed calculation system 120 includes a radar 121, a memory 122, and a processor 123. The radar 121 is mounted at the vehicle. In a possible situation, the vehicle speed calculation system 120 specifically includes a radar system. In this scenario, the processor 123 may specifically include a signal processing unit of the radar 121. In another possible situation, the vehicle speed calculation system 120 specifically includes a vehicle with a radar mounted thereon. In this scenario, the processor 123 may specifically include a vehicle-mounted processor. In another possible situation, the vehicle speed calculation system 120 specifically includes a system including a vehicle with a radar mounted thereon and the server 12 as shown in FIG. 1. In this scenario, the processor 123 may specifically include a processor of the server 12.

Specifically, the radar 121 at least includes an antenna. The antenna is used to receive an echo signal. The memory 122 stores a program code. The processor 123 is configured to execute the program code to obtain the echo signal and generate detection data according to the echo signal, determine a stationary object around the vehicle and stationary relative to a ground according to the detection data, determine a moving speed of the stationary object relative to the vehicle, and determine a vehicle speed according to the moving speed of the stationary object relative to the vehicle.

In some embodiments, the detection data includes at least one of energy of an object around the vehicle, a distance of the object around the vehicle relative to the vehicle, a speed of the object around the vehicle relative to the vehicle, or an angle of the object around the vehicle relative to the vehicle.

In some embodiments, the stationary object around the vehicle and stationary relative to the ground includes an object around the vehicle with energy greater than a preset energy threshold.

In some embodiments, the detection signal of the radar includes a linear frequency-modulated continuous wave.

In some embodiments, the detection data includes two-dimensional data including a distance dimension and a speed dimension, the distance dimension includes a plurality of distance units, and the speed dimension includes a plurality of speed units.

In some embodiments, a number of the plurality of speed units is positively correlated to a number of one or more periods of one or more frequency changes of the detection signal.

In some embodiments, a number of the plurality of distance units is positively correlated to a number of one or more sampling points of the echo signal in a period.

In some embodiments, when the processor 123 is configured to execute the program code to determine the moving speed of the stationary object relative to the vehicle, the processor 123 is specifically configured to execute the program code to calculate a number of one or more distance units with energy greater than a preset energy threshold among the plurality of distance units corresponding to each of the plurality of speed units, and determine a speed corresponding to one speed unit with a largest number of distance units among the plurality of speed units as the moving speed of the stationary object relative to the vehicle.

In some embodiments, before the processor 123 is configured to execute the program code to calculate the number of the one or more distance units with the energy greater than the preset energy threshold among the plurality of distance units corresponding to the each of the plurality of speed units, the processor 123 is further configured to execute the program code to calculate average energy of the plurality of speed units corresponding to each of the plurality of distance units, and determine the preset energy threshold corresponding to each of the plurality of distance units according to the average energy of the plurality of speed units corresponding to the each of the plurality of distance units.

In some embodiments, when the processor 123 is configured to execute the program code to calculate the number of the one or more distance units with the energy greater than the preset energy threshold among the plurality of distance units corresponding to the each of the plurality of speed units, the processor 123 is specifically configured to execute the program code to compare the energy of each of the plurality of distance units corresponding to the each of the plurality of speed units with the preset energy threshold corresponding to the each of the plurality of distance units, if the energy of the each of the plurality of distance units is greater than the preset energy threshold corresponding to the each of the plurality of distance units, increase a count corresponding to the each of the plurality of speed units by one.

In some embodiments, when the processor 123 is configured to execute the program code to determine the vehicle speed according to the moving speed of the stationary object relative to the vehicle, the processor 123 is specifically configured to execute the program code to determine a detectable speed range of the radar according to a wavelength of a detection signal of the radar and a frequency change period of the detection signal, if the moving speed of the stationary object relative to the vehicle is within the detectable speed range, determine the vehicle speed according to the moving speed of the stationary object relative to the vehicle.

In some embodiments, a frequency of a detection signal of the radar changes according to a plurality of different periods.

In some embodiments, when the processor 123 is configured to execute the program code to determine the moving speed of the stationary object around the vehicle and stationary relative to the ground relative to the vehicle according to the detection data, the processor 123 is specifically configured to execute the program code to when the frequency of the detection signal changes according to a first period of the plurality of different periods changes, determine a first moving speed of the stationary object relative to the vehicle, when the frequency of the detection signal changes according to a second period of the plurality of different periods, determine a second moving speed of the stationary object relative to the vehicle.

In some embodiments, when the processor 123 is configured to execute the program code to determine the vehicle speed according to the moving speed of the stationary object relative to the vehicle, the processor 123 is specifically configured to execute the program code to determine a first measurement vehicle speed according to the first moving speed of the stationary object relative to the vehicle, determine a second measurement vehicle speed according to the second moving speed of the stationary object relative to the vehicle, and determine the vehicle speed according to the first measurement vehicle speed, the second measurement vehicle speed, the first period, the second period, and the wavelength of the detection signal.

In some embodiments, when the processor 123 is configured to execute the program code to determine the vehicle speed according to the first measurement vehicle speed, the second measurement vehicle speed, the first period, the second period, and the wavelength of the detection signal. In the case of speed, the processor 123 is specifically configured to execute the program code to determine a first vehicle speed according to the first measurement vehicle speed, the first period, and the wavelength of the detection signal, determine a second vehicle speed according to the second measurement vehicle speed, the second period, and the wavelength of the detection signal, and determine a target vehicle speed according to the first vehicle speed and the second vehicle speed.

In some embodiments, when the processor 123 is configured to execute the program code to determine the target vehicle speed according to the first vehicle speed and the second vehicle speed, the processor 123 is specifically configured to execute the program code to determine an average value of the first vehicle speed and the second vehicle speed as the target vehicle speed.

In some embodiments, the radar includes a millimeter wave radar.

The specific principles and implementation manners of the vehicle speed calculation system consistent with the embodiments of the present disclosure are similar to the above-described embodiments, which are omitted here.

A vehicle consistent with the embodiments of the present disclosure is provided. The vehicle includes a vehicle body, a power system, and the vehicle speed calculation system described in the above embodiments. The power system is mounted at the vehicle body to provide power. The implementation manners and specific principles of the vehicle speed calculation system are consistent with the above-described embodiments, which are omitted here.

In addition, a computer-readable storage medium consistent with the embodiments ofr the present disclosure is provided. The computer-readable storage medium storing a computer program. The computer program is executed by a processor to implement the vehicle speed calculation method described in the above embodiments.

In the embodiments of the present disclosure, it should be understood that the disclosed device and method may be implemented in other manners. For example, the devices described above are merely illustrative. For example, the division of units may only be a logical function division, and there may be other ways of dividing the units. For example, plurality of units or components may be combined or may be integrated into another system, or some features may be ignored, or not executed. Further, the coupling or direct coupling or communication connection shown or discussed may include a direct connection or an indirect connection or communication connection through one or more interfaces, devices, or units, which may be electrical, mechanical, or in other form.

The units described as separate components may or may not be physically separate, and a component shown as a unit may or may not be a physical unit. That is, the units may be located in one place or may be distributed over a plurality of network elements. Some or all of the components may be selected according to the actual needs to achieve the object of the present disclosure.

In addition, the functional units in the various embodiments of the present disclosure may be integrated in one processing unit, or each unit may be an individual physically unit, or two or more units may be integrated in one unit. The above-described integrated unit may be implemented in hardware or hardware with a software functional unit.

The above-described integrated unit implemented in the form of a software functional unit may be stored in a computer-readable storage medium. The above-described software functional unit is stored in a storage medium and includes instructions to enable a computer device (such as a personal computer, a server, or a network device, etc.) or a processor to perform part or all of a method consistent with the embodiments of the present disclosure. The storage medium can be any medium that can store program codes, for example, a USB disk, a mobile hard disk, a read-only memory (ROM), a random access memory (RAM), a magnetic disk, or an optical disk.

Those skilled in the art can clearly understand that, for the convenience and conciseness of the description, a division of the above-described functional modules is used as an example only. In practical applications, the above-described functions can be allocated by different functional modules as required, that is, an internal structure of the device is divided into different functional modules to complete all or part of the functions described above. For a specific process of the device described above, reference may be made to the corresponding process in the above method embodiments, which is omitted here.

Finally, it should be noted that the above embodiments are only used to illustrate the technical solutions of the present disclosure, not to limit them; although the present disclosure has been described in detail with reference to the above-described embodiments, those of ordinary skill in the art should understand that: the technical solutions in the above-described embodiments can still be modified, or some or all of the technical features can be equivalently replaced; and these modifications or replacements do not make the essence of the corresponding technical solutions deviate from the range of the technical solutions of the embodiments of the present disclosure.

**Claims**

1. A vehicle speed calculation method applied to a vehicle, the vehicle is provided with a radar, the radar at least includes an antenna, the antenna is used for receiving an echo signal, **characterized in that**, the method comprises:

   obtaining the echo signal and generating detection data according to the echo signal;
   determining a stationary object around the vehicle and stationary relative to a ground according to the detection data;
   determining a moving speed of the stationary object relative to the vehicle;
   determining a vehicle speed according to the moving speed of the stationary object relative to the vehicle.

2. The method according to claim 1, **characterized in that**, the detection data includes at least one of the following: energy of an object around the vehicle, a distance of the object around the vehicle relative to the vehicle, a speed of the object around the vehicle relative to the vehicle, an angle of the object around the vehicle relative to the vehicle.

3. The method according to claim 1 or 2, **characterized in that**, the stationary object around the vehicle and stationary relative to the ground is an object around the vehicle with energy greater than a preset energy threshold.

4. The method according to any one of claims 1-3, **characterized in that**, a detection signal of the radar is a linear frequency-modulated continuous wave.

5. The method according to claim 4, **characterized in that**, the detection data is two-dimensional data including a distance dimension and a speed dimension, the distance dimension includes a plurality of distance units, and the speed dimension includes a plurality of speed units.

6. The method according to claim 5, **characterized in that**, a number of the plurality of speed units is positively correlated to a number of one or more periods of one or more frequency changes of the detection signal.

7. The method according to claim 6, **characterized in that**, a number of the plurality of distance units is positively correlated to a number of one or more sampling points of the echo signal in a period.

8. The method according to any one of claims 5-7, **characterized in that**, determining the moving speed of the stationary object relative to the vehicle, includes:

    calculating a number of one or more distance units with energy greater than a preset energy threshold among the plurality of distance units corresponding to each of the plurality of speed units;
    determining a speed corresponding to one speed unit with a largest number of distance units among the plurality of speed units as the moving speed of the stationary object relative to the vehicle.

9. The method according to claim 8, **characterized in that**, before calculating the number of the one or more distance units with the energy greater than the preset energy threshold among the plurality of distance units corresponding to the each of the plurality of speed units, the method further comprises:

    calculating average energy of the plurality of speed units corresponding to each of the plurality of distance units;
    determining the preset energy threshold corresponding to each of the plurality of distance units according to the average energy of the plurality of speed units corresponding to the each of the plurality of distance units.

10. The method according to claim 8 or 9, **characterized in that**, calculating the number of the one or more distance units with the energy greater than the preset energy threshold among the plurality of distance units corresponding to the each of the plurality of speed units, includes:

    comparing the energy of each of the plurality of distance units corresponding to the each of the plurality of speed units with the preset energy threshold corresponding to the each of the plurality of distance units;
    if the energy of the each of the plurality of distance units is greater than the preset energy threshold corresponding to the each of the plurality of distance units, increasing a count corresponding to the each of the plurality of speed units by one.

11. The method according to claim 1, **characterized in that**, determining the vehicle speed according to the moving speed of the stationary object relative to the vehicle, includes:

    determining a detectable speed range of the radar according to a wavelength of a detection signal of the radar and a frequency change period of the detection signal;
    when the moving speed of the stationary object relative to the vehicle is within the detectable speed range, determining the vehicle speed according to the moving speed of the stationary object relative to the vehicle.

12. The method according to claim 1, **characterized in that**, a frequency of a detection signal of the radar changes according to a plurality of different periods.

13. The method according to claim 12, **characterized in that**, determining the moving speed of the stationary object relative to the vehicle, includes:

    when the frequency of the detection signal changes according to a first period of the plurality of different periods, determining a first moving speed of the stationary object relative to the vehicle;
    when the frequency of the detection signal changes according to a second period of the plurality of different periods, determining a second moving speed of the stationary object relative to the vehicle.

14. The method according to claim 13, **characterized in that**, determining the vehicle speed according to the moving speed of the stationary object relative to the vehicle, includes:

determining a first measurement vehicle speed according to the first moving speed of the stationary object relative to the vehicle;
determining a second measurement vehicle speed according to the second moving speed of the stationary object relative to the vehicle;
determining the vehicle speed according to the first measurement vehicle speed, the second measurement vehicle speed, the first period, the second period, and the wavelength of the detection signal.

15. The method according to claim 14, **characterized in that**, determining the vehicle speed according to the first measurement vehicle speed, the second measurement vehicle speed, the first period, the second period, and the wavelength of the detection signal, includes:

determining a first vehicle speed according to the first measurement vehicle speed, the first period, and the wavelength of the detection signal;
determining a second vehicle speed according to the second measurement vehicle speed, the second period, and the wavelength of the detection signal;
determining a target vehicle speed according to the first vehicle speed and the second vehicle speed.

16. The method according to claim 15, **characterized in that**, determining the target vehicle speed according to the first vehicle speed and the second vehicle speed, includes:
determining an average value of the first vehicle speed and the second vehicle speed as the target vehicle speed.

17. The method according to any one of claims 1-16, **characterized in that**, the radar is a millimeter wave radar.

18. A vehicle speed calculation system, **characterized in that**, comprises a radar, a memory, and a processor, the radar is mounted at a vehicle, the radar at least includes an antenna, the antenna is used for receiving an echo signal;

the memory stores a program code;
the processor is configured to execute the program code, when the program code is executed, the processor is configured to perform following operations:

obtaining the echo signal and generate detection data according to the echo signal;
determining a stationary object around the vehicle and stationary relative to a ground according to the detection data;
determining a moving speed of the stationary object relative to the vehicle;
determining a vehicle speed according to the moving speed of the stationary object relative to the vehicle.

19. The system according to claim 18, **characterized in that**, the detection data includes at least one of the following: energy of an object around the vehicle, a distance of the object around the vehicle relative to the vehicle, a speed of the object around the vehicle relative to the vehicle, an angle of the object around the vehicle relative to the vehicle.

20. The system according to claim 18 or 19, **characterized in that**, the stationary object around the vehicle and stationary relative to the ground is an object around the vehicle with energy greater than a preset energy threshold.

21. The system according to any one of claims 18-20, **characterized in that**, a detection signal of the radar is a linear frequency-modulated continuous wave.

22. The system according to claim 21, **characterized in that**, the detection data is two-dimensional data including a distance dimension and a speed dimension, the distance dimension includes a plurality of distance units, and the speed dimension includes a plurality of speed units.

23. The system according to claim 22, **characterized in that**, a number of the plurality of speed units is positively correlated to a number of one or more periods of one or more frequency changes of the detection signal.

24. The system according to claim 23, **characterized in that**, a number of the plurality of distance units is positively correlated to a number of one or more sampling points of the echo signal in a period.

25. The system according to any one of claims 22-24, **characterized in that**, when the processor determines the moving speed of the stationary object relative to the vehicle, the processor is specifically configured to:

    calculate a number of one or more distance units with energy greater than a preset energy threshold among the plurality of distance units corresponding to each of the plurality of speed units;

    determine a speed corresponding to one speed unit with a largest number of distance units among the plurality of speed units as the moving speed of the stationary object relative to the vehicle.

26. The system according to claim 25, **characterized in that**, before the processor calculates the number of the one or more distance units with the energy greater than the preset energy threshold among the plurality of distance units corresponding to the each of the plurality of speed units, the processor is further configured to:

    calculate average energy of the plurality of speed units corresponding to each of the plurality of distance units;

    determine the preset energy threshold corresponding to each of the plurality of distance units according to the average energy of the plurality of speed units corresponding to the each of the plurality of distance units.

27. The system according to claim 25 or 26, **characterized in that**, when the processor calculates the number of the one or more distance units with the energy greater than the preset energy threshold among the plurality of distance units corresponding to the each of the plurality of speed units, the processor is specifically configured to:

    compare the energy of each of the plurality of distance units corresponding to the each of the plurality of speed units with the preset energy threshold corresponding to the each of the plurality of distance units;

    if the energy of the each of the plurality of distance units is greater than the preset energy threshold corresponding to the each of the plurality of distance units, increase a count corresponding to the each of the plurality of speed units by one.

28. The system according to claim 18, **characterized in that**, when the processor determines the vehicle speed according to the moving speed of the stationary object relative to the vehicle, the processor is specifically configured to:

    determine a detectable speed range of the radar according to a wavelength of a detection signal of the radar and a frequency change period of the detection signal;

    when the moving speed of the stationary object relative to the vehicle is within the detectable speed range, determine the vehicle speed according to the moving speed of the stationary object relative to the vehicle.

29. The system according to claim 18, **characterized in that**, a frequency of a detection signal of the radar changes according to a plurality of different periods.

30. The system according to claim 29, **characterized in that**, when the processor determines the moving speed of the stationary object relative to the vehicle, the processor is specifically configured to:

    when the frequency of the detection signal changes according to a first period of the plurality of different periods, determine a first moving speed of the stationary object relative to the vehicle;

    when the frequency of the detection signal changes according to a second period of the plurality of different periods, determine a second moving speed of the stationary object relative to the vehicle.

31. The system according to claim 30, **characterized in that**, when the processor determines the vehicle speed according to the moving speed of the stationary object relative to the vehicle, the processor is specifically configured to:

    determine a first measurement vehicle speed according to the first moving speed of the stationary object relative to the vehicle;

    determine a second measurement vehicle speed according to the second moving speed of the stationary object relative to the vehicle;

    determine the vehicle speed according to the first measurement vehicle speed, the second measurement vehicle speed, the first period, the second period, and the wavelength of the detection signal.

**32.** The system according to claim 31, **characterized in that**, when the processor determines the vehicle speed according to the first measurement vehicle speed, the second measurement vehicle speed, the first period, the second period, and the wavelength of the detection signal, the processor is specifically configured to:

determine a first vehicle speed according to the first measurement vehicle speed, the first period, and the wavelength of the detection signal;
determine a second vehicle speed according to the second measurement vehicle speed, the second period, and the wavelength of the detection signal;
determine a target vehicle speed according to the first vehicle speed and the second vehicle speed.

**33.** The system according to claim 32, **characterized in that**, when the processor determines the target vehicle speed according to the first vehicle speed and the second vehicle speed, the processor is specifically configured to: determine an average value of the first vehicle speed and the second vehicle speed as the target vehicle speed.

**34.** The system according to any one of claims 18-33, **characterized in that**, the radar is a millimeter wave radar.

**35.** A vehicle, **characterized in that**, comprising:

a vehicle body;
a power system mounted at the vehicle body and configured to provide power; and
the vehicle speed calculation system according to any one of claims 18-34.

**36.** A computer-readable storage medium, **characterized in that**, storing a computer program thereon, the computer program is executed by a processor to implement the method according to any one of claims 1-17.

FIG. 1

| |
|---|
| Obtain an echo signal and generate detection data according to the echo signal |

S201

| |
|---|
| Determine, according to the detection data, a stationary object around the vehicle and stationary relative to a ground |

S202

| |
|---|
| Determine a moving speed of the stationary object relative to the vehicle |

S203

| |
|---|
| Determine a vehicle speed according to the moving speed of the stationary object relative to the vehilce |

S204

FIG. 2

FIG. 3

FIG. 4

Calculate a number of one or more distance units with energy greater than a preset energy threshold among a plurality of distance units corresponding to each of a plurality of speed units ⟶ S501

Determine a speed corresponding to one speed unit with a largest number of distance units among the plurality of speed units as the moving speed of the stationary object relative to the vehicle ⟶ S502

FIG. 5

Calculate average energy of a plurality of speed units corresponding to each of a plurality of distance units ⟶ S601

Determine a preset energy threshold corresponding to each of the plurality of distance units according to the average energy of the plurality of speed units corresponding to the each of the plurality of distance units ⟶ S602

FIG. 6

FIG. 7

FIG. 8

| When a frequency of the detection signal changes according to a plurality of different periods, determine a first moving speed of the stationary object relative to the vehicle according to the detection data |

S901

| When the frequency of the detection signal changes according to the plurality of different periods, determine a second moving speed of the stationary object relative to the vehicle according to the detection data |

S902

FIG. 9

| Determine a first measurement speed of the vehicle according to the first moving speed of the stationary object relative to the vehicle | S1001 |

↓

| Determine a second measurement speed of the vehicle according to the second moving speed of the stationary object relative to the vehicle | S1002 |

↓

| Determine the vehicle speed according to the first measurement speed of the vehicle, the second measurement speed of the vehicle, the first period, the second period, and a wavelength of the detection signal | S1003 |

FIG. 10

f(t)

T1    T1    T2    T2    t

FIG. 11

_120_

_122_

_121_

Vehicle speed
calculation system

Processor

Radar

Memory

_123_

FIG. 12

## INTERNATIONAL SEARCH REPORT

| International application No. |
| --- |
| **PCT/CN2018/124249** |

| **A.** | **CLASSIFICATION OF SUBJECT MATTER** |
| --- | --- |

G01S 13/58(2006.01)i; B60W 40/02(2006.01)n

According to International Patent Classification (IPC) or to both national classification and IPC

| **B.** | **FIELDS SEARCHED** |
| --- | --- |

Minimum documentation searched (classification system followed by classification symbols)

G01S; B60W

Documentation searched other than minimum documentation to the extent that such documents are included in the fields searched

Electronic data base consulted during the international search (name of data base and, where practicable, search terms used)

CNABS; VEN; CNTXT; USTXT; WOTXT; EPTXT; CNKI: 大疆创新科技, 陆新飞, 车速, 速度, 测算, 计算, 确定, 雷达, 波, 静, 止, 频率, 多个, 能量, 距离, 方法, 矩阵, 阵列, velocity, speed, determine, measure, operate, wave, radar, stator, unmoving, static, rest, frequency, multiple, power, energy, distance, method, matrix, array

| **C.** | **DOCUMENTS CONSIDERED TO BE RELEVANT** | |
| --- | --- | --- |
| Category* | Citation of document, with indication, where appropriate, of the relevant passages | Relevant to claim No. |
| X | CN 108226924 A (LI, Xuan) 29 June 2018 (2018-06-29) description, paragraphs [0065]-[0101], and figures 1 and 2 | 1-6, 11, 17-23, 28, 34-36 |
| Y | CN 108226924 A (LI, Xuan) 29 June 2018 (2018-06-29) description, paragraphs [0065]-[0101], and figures 1 and 2 | 7, 12-16, 24, 29-33 |
| Y | CN 108152809 A (GM GLOBAL TECHNOLOGY OPERATIONS LLC) 12 June 2018 (2018-06-12) description, paragraphs [0014]-[0028] | 7, 24 |
| Y | CN 105549001 A (DALIAN ROILAND TECHNOLOGY CO., LTD.) 04 May 2016 (2016-05-04) description, paragraphs [0083]-[0093] | 12-16, 29-33 |
| A | CN 106405535 A (KYOSAN ELECTRIC MFG. CO., LTD. et al.) 15 February 2017 (2017-02-15) entire document | 1-36 |
| A | US 2018095173 A1 (FUJITSU TEN LIMITED) 05 April 2018 (2018-04-05) entire document | 1-36 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 March 2019** | **17 April 2019** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/124249**

| Patent document cited in search report | | | Publication date (day/month/year) | Patent family member(s) | | | Publication date (day/month/year) |
|---|---|---|---|---|---|---|---|
| CN | 108226924 | A | 29 June 2018 | None | | | |
| CN | 108152809 | A | 12 June 2018 | US | 2018156911 | A1 | 07 June 2018 |
| | | | | DE | 102017128508 | A1 | 07 June 2018 |
| CN | 105549001 | A | 04 May 2016 | CN | 105549001 | B | 04 January 2019 |
| CN | 106405535 | A | 15 February 2017 | None | | | |
| US | 2018095173 | A1 | 05 April 2018 | JP | 2018059813 | A | 12 April 2018 |

Form PCT/ISA/210 (patent family annex) (January 2015)